# EUROPEAN PATENT APPLICATION

(11) **EP 4 398 389 A1**
(43) Date of publication of application: **10.07.2024**
(21) Application number: 22918491.6
(22) Date of filing: 29.12.2022
(51) Int. Cl.: H01M 50/186, H01M 50/645

(54) **BATTERY CELL ELECTROLYTE SUPPLY METHOD**

(30) Priority: 07.01.2022 CN 202210017945
(71) Applicant: Contemporary Amperex Technology Co., Limited, Ningde, Fujian 352100 (CN)
(72) Inventor: LIAN, Dengwei, Ningde, Fujian 352100 (CN)
(74) Representative: Ran, Handong
(86) International application number: PCT/CN2022/143539
(87) International publication number: WO 2023/131050

(57) **Abstract**

The present application relates to the technical field of new energy, in particular to a battery cell electrolyte supply method. The method comprises: processing a housing of a battery cell at the outside of the battery cell to form a first recess, so that the thickness of a bottom wall of the first recess is smaller than that of the surrounding housing; piercing the bottom wall of the first recess from the outside of the battery cell to the inside of the battery cell so as to form an electrolyte injection structure; and injecting an electrolyte into the battery cell through the electrolyte injection structure. By means of the mode, the present application can supply an electrolyte to a battery cell, thereby improving the performance of the battery cell and prolonging the service life thereof.

## Description

### CROSS-REFERENCE TO RELATED APPLICATIONS

This application claims priority to Chinese Patent Application No. 202210017945.9, filed on January 7, 2022 and entitled "METHOD FOR SUPPLEMENTING ELECTROLYTE SOLUTION FOR BATTERY CELL", which is incorporated herein by reference in its entirety.

### TECHNICAL FIELD

This application relates to the field of new energy technology, and in particular, to a method for supplementing an electrolyte solution for a battery cell.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

With the rapid development of the new energy field, batteries are applied in a wider range of fields, and higher requirements are put forward for the performance and life of the batteries. The inventor hereof finds during research that, an end cap and a housing of a battery fit each other to form a hermetic space. An electrolyte solution is disposed in the hermetic space to provide a charging and discharging environment. For lithium batteries, with the increase in the number of reactions between lithium ions and the electrolyte solution, the electrolyte solution is consumed without being supplemented, thereby deteriorating the performance of the battery and shortening the service life drastically.

### SUMMARY

In view of the above problems, this application provides a method for supplementing an electrolyte solution for a battery cell, so as to be able to supplement the electrolyte solution in the battery cell, improve the performance of the battery cell, and prolong the service life of the battery cell.

According to an aspect in an embodiment of this application, an embodiment of this application provides a method for supplementing an electrolyte solution for a battery cell. The method includes: processing a shell of the battery cell from outside the battery cell to form a first recessed portion, and causing a thickness of a bottom wall of the first recessed portion to be less than a thickness of the shell around the bottom wall; piercing the bottom wall of the first recessed portion from outside the battery cell toward an interior of the battery cell to form an injection structure; and injecting the electrolyte solution into the battery cell through the injection structure.

By processing the shell of the battery cell from outside the battery cell to form the first recessed portion and causing the thickness of the bottom wall of the first recessed portion to be less than the thickness of the shell around the bottom wall, it is convenient to subsequently pierce the bottom wall of the first recessed portion from outside the battery cell toward the interior of the battery cell to form the injection structure. By injecting the electrolyte solution into the battery cell through the injection structure, the electrolyte solution in the battery cell is supplemented, thereby effectively increasing the service life of the battery cell. The bottom wall of the first recessed portion is bent inward and deformed when pierced. Compared to the practice of directly cutting out and processing an injection port on the shell of the battery cell, the technical solution hereof avoids impact on the internal electrolyte solution caused by the resulting metal chips or other impurities falling into the shell, and is conducive to ensuring the performance of the battery cell in subsequent use.

In some exemplary embodiments, the method further includes: mounting a sealing cap in the first recessed portion; and hermetically connecting the sealing cap to the first recessed portion. By mounting a sealing cap in the first recessed portion and hermetically connecting the sealing cap to the first recessed portion, a hermetic space is formed inside the battery cell replenished with the electrolyte solution, thereby ensuring the stability of the battery cell in subsequent operation.

In some exemplary embodiments, the hermetically connecting the sealing cap to the first recessed portion includes: welding an edge of the sealing cap to an edge of the first recessed portion to create a hermetic connection between the sealing cap and the first recessed portion. By welding the edge of the sealing cap to the edge of the first recessed portion, this application effectively ensures the stability of the structure at the first recessed portion after the supplementation of the electrolyte solution while improving the hermeticity between the sealing cap and the first recessed portion, and provides high reliability of the battery cell in subsequent operation.

In some exemplary embodiments, the hermetically connecting the sealing cap to the first recessed portion includes: applying a sealant between the sealing cap and the first recessed portion to create a hermetic connection between the sealing cap and the first recessed portion. The operation of applying a sealant between the sealing cap and the first recessed portion improves the ease of operation while ensuring the internal hermeticity of the battery cell, thereby improving the electrolyte injection efficiency.

In some exemplary embodiments, before the processing a shell of the battery cell from outside the battery cell to form a first recessed portion, the method includes: processing the shell of the battery cell from outside the battery cell to form a second recessed portion. The processing a shell of the battery cell from outside the battery cell to form a first recessed portion includes: processing a bottom wall of the second recessed portion from outside the second recessed portion to form the first recessed portion, where an area of the bottom wall of the second recessed portion is greater than an area of an opening of the first recessed portion. By processing the bottom wall of the second recessed portion to form the first recessed portion and letting the area of the bottom wall of the second recessed portion be greater than the area of the opening of the first recessed portion, a step structure is formed between the second recessed portion and the first recessed portion, thereby facilitating positioning during electrolyte injection into the battery cell. Through the step structure, the sealing cap can be disposed more conveniently, and the battery cell replenished with the electrolyte solution can be sealed more reliably.

In some exemplary embodiments, the method further includes: mounting a sealing cap in the second recessed portion; and hermetically connecting the sealing cap to the second recessed portion. When the sealing cap is mounted in the second recessed portion, because the area of the bottom wall of the second recessed portion is larger than the area of the opening of the first recessed portion, the sealing cap is in contact with both the sidewall and the bottom wall of the second recessed portion, thereby increasing the contact area between the sealing cap and the second recessed portion, and ensuring high hermeticity in the battery cell when the sealing cap is hermetically connected to the second recessed portion subsequently.

In some exemplary embodiments, the hermetically connecting the sealing cap to the second recessed portion includes: welding an edge of the sealing cap to an edge of the second recessed portion to create a hermetic connection between the sealing cap and the second recessed portion. By welding the edge of the sealing cap to the edge of the second recessed portion, this application effectively ensures the stability of the structure at the second recessed portion after the supplementation of the electrolyte solution while improving the hermeticity between the sealing cap and the first recessed portion, and provides high reliability of the battery cell in subsequent operation. Moreover, because the area of the bottom wall of the second recessed portion is larger than the area of the opening of the first recessed portion, when the sealing cap is welded to the second recessed portion, the melted structure is limited when flowing to the bottom wall of the second recessed portion, thereby preventing the melted structure from flowing from the injection structure into the shell to affect the electrolyte solution.

In some exemplary embodiments, a groove is created on a side of the sealing cap, the side being away from the shell. The method further includes: releasing a welding stress between the sealing cap and the first recessed portion or the second recessed portion through the groove. During welding, the welded piece is melted and then cured and fused. The melted structure is limited by the unmelted structure during the curing, thereby generating a welding stress. By disposing a groove at an end of the sealing cap, the end being back from the shell, a part of the melted structure flows during welding at the edge of the sealing cap, and fills the gap between the sealing cap and the sidewall of the first recessed portion or the second recessed portion. Another part of the melted structure flows in the groove, so that the melted structure at the edge of the sealing cap is not limited by other structures during curing, thereby ensuring that the welding stress can be released and enhancing the structural stability of the sealing cap after welding.

In some exemplary embodiments, the hermetically connecting the sealing cap to the second recessed portion includes: applying a sealant between the sealing cap and the second recessed portion to create a hermetic connection between the sealing cap and the second recessed portion. The operation of applying a sealant between the sealing cap and the second recessed portion improves the ease of operation while ensuring the internal hermeticity of the battery cell, thereby improving the electrolyte injection efficiency.

In some exemplary embodiments, the shell includes an end cap and a housing, and the end cap fits and covers the housing. The processing a shell of the battery cell from outside the battery cell to form a first recessed portion includes: processing the end cap from outside the battery cell to form the first recessed portion. When the battery cell is positioned, the end cap is generally located on the top. Therefore, processing the end cap from outside the battery cell to form the first recessed portion is equivalent to processing the end cap from the top of the battery cell, thereby making it convenient to control the feed-in amount of the cutter, and improving the precision and efficiency of processing the first recessed portion.

In some exemplary embodiments, the processing the end cap from outside the battery cell to form the first recessed portion includes: processing the end cap by means of a drill bit or milling cutter to form the first recessed portion. By cutting the end cap with the drill bit or milling cutter, the first recessed portion is processed and formed on the end cap. By controlling the feed-in amount of the drill bit or milling cutter, it is ensured that the thickness of the processed first recessed portion is appropriate. On the one hand, such operations make it convenient to subsequently pierce the bottom wall of the first recessed portion to form an injection structure. On the other hand, such operations prevent the end cap from being pierced due to over-processing of the first recessed portion. Through the pierced end cap, metal chips or other impurities are prone to fall into the battery cell to affect the electrolyte solution.

In some exemplary embodiments, a protection structure is disposed on the drill bit or milling cutter. The processing the end cap from outside the battery cell to form the first recessed portion includes: covering the first recessed portion with the protection structure. By disposing a protection structure on the drill bit or milling cutter and covering the first recessed portion with the protection structure, the flying metal chips generated during the cutting remain in the protection structure due to shielding of the protection structure in the cutting process. Such arrangement facilitates unified treatment of the flying metal chips and other impurities after completion of processing the first recessed portion, and prevents the flying metal chips generated during processing from falling on the shell and affecting the structure of the battery cell.

In some exemplary embodiments, the covering the first recessed portion with the protection structure includes: performing vacuum-cleaning inside the protection structure. The vacuum-cleaning in the protection structure prevents the flying metal chips generated during cutting from staying between the tool bit and the inner wall of the first recessed portion and scratching the inner wall of the first recessed portion. In addition, the first recessed portion is cut and processed at the same time of cleaning up the impurities, thereby improving the efficiency of supplementing the electrolyte solution for the battery cell.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic flowchart of a method for supplementing an electrolyte solution for a battery cell according to an embodiment of this application;
FIG. 5 is a schematic structural diagram of a battery cell replenished with an electrolyte solution by using a method for supplementing an electrolyte solution for a battery cell according to an embodiment of this application;
FIG. 6 is a schematic structural diagram of a cutter for processing a first recessed portion in a method for supplementing an electrolyte solution for a battery cell according to an embodiment of this application;
FIG. 7 is a schematic structural diagram of a needle for processing an injection structure in a method for supplementing an electrolyte solution for a battery cell according to an embodiment of this application;
FIG. 8 is a schematic structural diagram of a battery cell replenished with an electrolyte solution by using a method for supplementing an electrolyte solution for a battery cell according to another embodiment of this application;
FIG. 9 is a schematic flowchart of some steps in a method for supplementing an electrolyte solution for a battery cell according to another embodiment of this application;
FIG. 10 is a schematic structural diagram of a battery cell replenished with an electrolyte solution by using the method shown in FIG. 9 for supplementing an electrolyte solution for a battery cell;
FIG. 11 is a schematic structural diagram of a cutter for processing a first recessed portion and a second recessed portion in the method shown in FIG. 9 for supplementing an electrolyte solution for a battery cell; and
FIG. 12 is a schematic flowchart of some steps in a method for supplementing an electrolyte solution for a battery cell according to another embodiment of this application.

List of reference numerals:
vehicle 5000;
battery 500, controller 600, motor 700;
box 50, first part 51, second part 52;
battery cell 100, shell 110, end cap 111, electrode terminal 111a, housing 112, electrode assembly 113, tab 113a, first recessed portion 120, injection structure 130, sealing cap 140, groove 141, second recessed portion 150;
cutter 200, first body portion 210, tool bit 220, first tool bit 221, second tool bit 222, protection structure 230, vacuuming pipeline 240;
needle 300, second body portion 310, needle tip 320.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

For a lithium battery, in order to ensure a good charging and discharging environment inside a battery cell, high hermeticity needs to be ensured when the housing and the end cap are assembled together. A hermetic space is formed between the housing and the end cap, and an electrode assembly and an electrolyte solution are disposed in the hermetic space to enable charging and discharging of the battery cell. During the charging and discharging of the battery cell, lithium ions on the electrode assembly react with an electrolyte solution. With the increase of the number of reactions, the electrolyte solution is consumed, the performance of the battery cell declines, and the service life decreases accordingly.

Due to the need to ensure the hermeticity of the battery cell, it is not practicable to supplement the electrolyte solution depleted after the battery cell is assembled, thereby resulting in a short lifespan of the battery cell. In addition, with the increase in the working time of the battery cell, the performance of the battery cell declines accordingly.

In view of the above problem, this application discloses a method for supplementing an electrolyte solution for a battery cell. By processing a shell of the battery cell from outside the battery cell, a first recessed portion is formed. The thickness of a bottom wall of the first recessed portion is less than the thickness of the shell around the bottom wall. Subsequently, a bottom wall of the first recessed portion is pierced from outside the battery cell toward the interior of the battery cell to form an injection structure. The electrolyte solution is injected into the battery cell through the injection structure, thereby supplementing the electrolyte solution in the battery cell and effectively increasing the service life of the battery cell. The injection structure formed by piercing according to this embodiment of this application does not generate metal chips, thereby preventing impurities from falling into the battery cell. The bottom wall of the first recessed portion is bent inward and deformed when pierced. Compared to the practice of directly cutting out and processing an injection port on the shell of the battery cell, the technical solution hereof avoids impact on the internal electrolyte solution caused by the resulting metal chips or other impurities falling into the shell, and is conducive to ensuring the performance of the battery cell in subsequent use. The technical solution disclosed in this application is applicable to more than an electrolyte injection process of a battery cell that is initially produced and assembled. For a battery cell that has been used, the corresponding first recessed portion and injection structure can still be processed and disposed on the battery cell that needs to be recycled and maintained, so as to refill the battery cell with the electrolyte solution, improve the performance of the battery cell, and prolong the service life of the battery cell.

The method for supplementing an electrolyte solution for a battery cell according to this embodiment of this application is applicable to various batteries. The batteries may include, but are not limited to use in, electrical devices such as a vehicle, watercraft, or aircraft.

The battery that employs the method for supplementing an electrolyte solution for a battery cell according to an embodiment of this application may serve as a power supply of an electrical device. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, an example is described here. In the example, the battery that employs the method for supplementing an electrolyte solution for a battery cell according to an embodiment of this application is applied to a vehicle 5000.

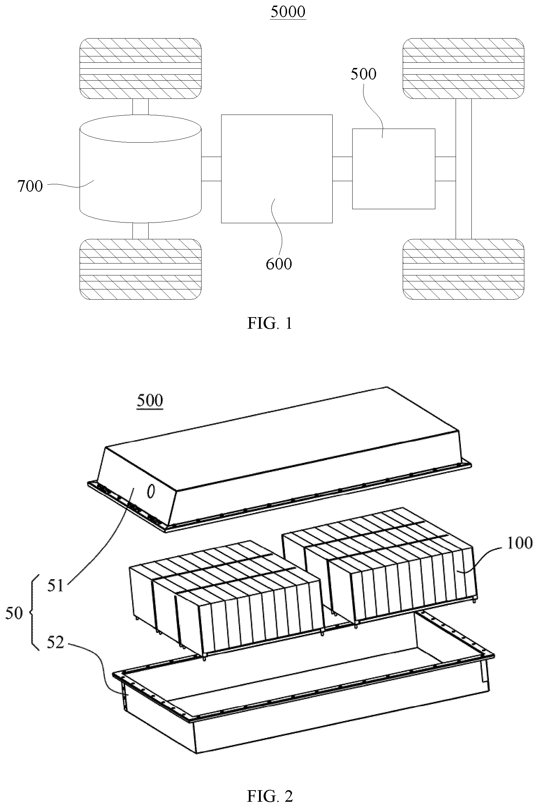

Referring to FIG. 1, FIG. 1 is a schematic structural diagram of a vehicle 5000 according to some embodiments of this application. The vehicle 5000 may be an oil-fueled vehicle, a natural gas vehicle, or a new energy vehicle. The new energy vehicle may be a battery electric vehicle, a hybrid electric vehicle, a range-extended electric vehicle, or the like. A battery 500 is disposed inside the vehicle 5000. The battery 500 may be disposed at the bottom, front, or rear of the vehicle 5000. The battery 500 may be configured to supply power to the vehicle 5000. For example, the battery 500 may serve as an operating power supply of the vehicle 5000. The vehicle 5000 may further include a controller 600 and a motor 700. The controller 600 is configured to control the battery 500 to supply power to the motor 700, for example, to meet electrical energy requirements in starting, navigating, or running the vehicle 5000.

In some embodiments of this application, the battery 500 serves not only as an operating power supply of the vehicle 5000, but may also serve as a driving power supply of the vehicle 5000 to provide driving power for the vehicle 5000 in place of or partly in place of fuel oil or natural gas.

Referring to FIG. 2, FIG. 2 is a schematic structural exploded view of a battery 500 that employs a method for supplementing an electrolyte solution for a battery cell according to some embodiments of this application. The battery 500 includes a box 50 and a battery cell 100. The battery cell 100 is accommodated in the box 50. The box 50 is configured to provide an accommodation space for the battery cell 100. The box 50 may be in various structures. In some embodiments, the box 50 may include a first part 51 and a second part 52. The first part 51 and the second part 52 fit and cover each other. The first part 51 and the second part 52 together define an accommodation space configured to accommodate the battery cell 100. The second part 52 may be a hollow structure opened at one end. The first part 51 may be a plate-like structure. The first part 51 fits on an opening side of the second part 52 so that the first part 51 and the second part 52 together define the accommodation space. Alternatively, both the first part 51 and the second part 52 may be hollow structures opened at one side. The opening side of the first part 51 fits the opening side of the second part 52. Definitely, the box 50 formed by the first part 51 and the second part 52 may be in various shapes, such as a cylinder or a cuboid.

The battery 500 may contain a plurality of battery cells 100. The plurality of battery cells 100 may be connected in series, parallel, or series-and-parallel pattern. The series-and-parallel pattern means a combination of series connection and parallel connection of the plurality of battery cells 100. The plurality of battery cells 100 may be directly connected in series, parallel, or series-and-parallel pattern, and then the whole of the plurality of battery cells 100 may be accommodated in the box 50. Alternatively, the plurality of battery cells 100 may be connected in series, parallel, or series-and-parallel pattern to form a battery 500 in the form of battery modules first. A plurality of battery modules are then connected in series, parallel, or series-and-parallel pattern to form a whole for being accommodated in the box 50. The battery 500 may further include other structures. For example, the battery 500 may further include a busbar component. The busbar component is configured to implement electrical connection between the plurality of battery cells 100.

Each battery cell 100 may be, but is not limited to, a secondary battery or primary battery; or, a lithium-sulfur battery, a sodium-ion battery, or a magnesium-ion battery. The battery cell 100 may be in the shape of a cylinder, flat body, cuboid, or the like.

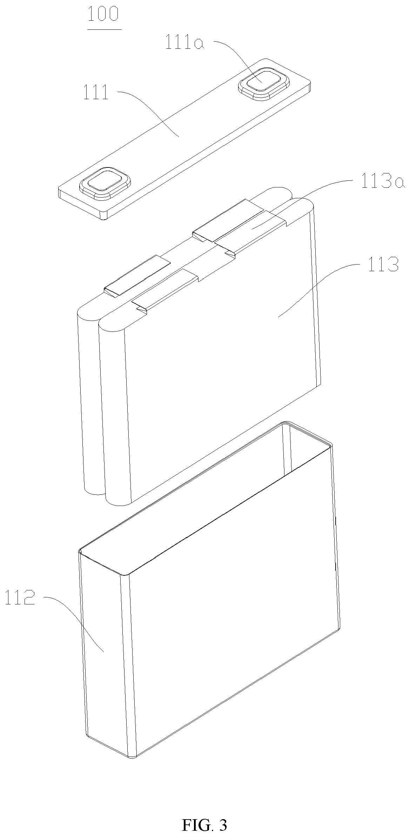

Referring to FIG. 3, FIG. 3 is a schematic structural exploded view of a battery cell 100 in a battery that employs a method for supplementing an electrolyte solution for a battery cell according to some embodiments of this application. The battery cell 100 is a minimum unit for making up a battery. As shown in FIG. 3, the battery cell 100 includes an end cap 111, a housing 112, an electrode assembly 113, and other functional components.

The end cap 111 is a component that fits and covers the opening of the housing 112 to isolate the internal environment of the battery cell 100 from the external environment. Without limitation, the shape of the end cap 111 may be adapted to the shape of the housing 112 to fit the housing 112. In some embodiments, the end cap 111 may be made of a material of appropriate hardness and strength (such as aluminum alloy), thereby making the end cap 111 not prone to deform in a case of being pressed or impacted, and improving the structural strength and safety performance of the battery cell 100. Functional components such as electrode terminals 111a may be disposed on the end cap 111. The electrode terminals 111a may be configured to be electrically connected to the electrode assembly 113 to output or input electrical energy of the battery cell 100. In some embodiments, a pressure relief mechanism configured to release an internal pressure when the internal pressure or temperature of the battery cell 100 reaches a threshold may be further disposed on the end cap 111. The end cap 111 may also be made of a variety of materials such as copper, iron, aluminum, stainless steel, aluminum alloy, or plastic, without being particularly limited herein. In some embodiments, an insulation piece may be further disposed on an inner side of the end cap 111. The insulation piece may be configured to isolate an electrically connected component in the housing 112 from the end cap 111 to reduce short-circuit risks. For example, the insulator may be plastic, rubber, or the like.

The housing 112 is a component configured to fit the end cap 111 to form an internal environment of the battery cell 100. The formed internal environment may be used to accommodate the electrode assembly 113, an electrolytic solution, and other components. The housing 112 and the end cap 111 may be stand-alone components. An opening may be made on the housing 112. At the opening, the end cap 111 fits with the opening to form the internal environment of the battery cell 100. Not restrictively, the end cap 111 and the housing 112 may be integrated. The housing 112 may be in various shapes and sizes, such as a cuboid, cylinder, or hexagonal prism. Specifically, the shape of the housing 112 may depend on the specific shape and size of the electrode assembly 113. The housing 112 may be made of a variety of materials such as copper, iron, aluminum, stainless steel, aluminum alloy, or plastic, without being particularly limited herein.

The electrode assembly 113 is a component that reacts electrochemically in the battery cell 100. The housing 112 may contain one or more electrode assemblies 113. The electrode assembly 113 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab 113a. The positive tab and the negative tab may be located at one end of the body portion together or at two ends of the body portion respectively. In a charge-and-discharge process of the battery, the positive active material and the negative active material react with an electrolytic solution. The tabs 113a are connected to electrode terminals to form a current circuit.

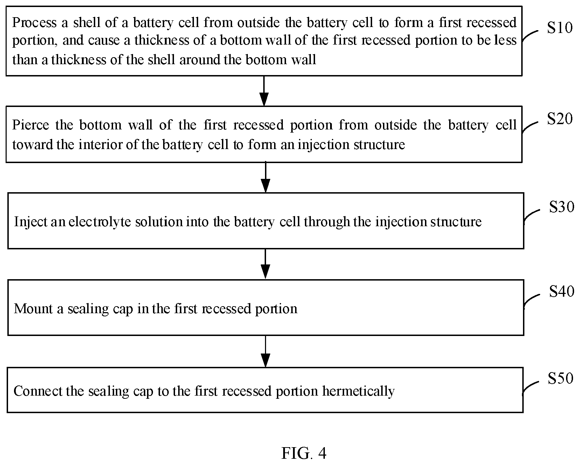

An embodiment of this application provides a method for supplementing an electrolyte solution for a battery cell. Specifically, referring to FIG. 4, which shows a process of the method for supplementing an electrolyte solution for a battery cell according to this embodiment of this application, the method for supplementing an electrolyte solution for a battery cell includes the following steps:
S10: Processing a shell of the battery cell from outside the battery cell to form a first recessed portion, and causing a thickness of a bottom wall of the first recessed portion to be less than a thickness of the shell around the bottom wall;
S20: Piercing the bottom wall of the first recessed portion from outside the battery cell toward the interior of the battery cell to form an injection structure; and
S30: Injecting the electrolyte solution into the battery cell through the injection structure.

In this embodiment of this application, the shell of the battery cell is processed from outside the battery cell to form the first recessed portion. The shell of the battery cell may be a housing or an end cap. The location of the first recessed portion may be selected depending on the specific structure of the battery cell. Generally, when the first recessed portion is disposed on the end cap, other structures such as an explosion-proof valve may be disposed on the end cap. In order to avoid conflict between the injection path and the structures such as the explosion-proof valve, the injection path may be disposed at a position far away from the structures such as the explosion-proof valve. In some embodiments, the injection path may be disposed on an edge of the end cap. The specific position is not limited herein. When the first recessed portion is disposed on the housing, the first recessed portion may be disposed depending on the location of the battery cell. Generally, the first recessed portion is disposed at an upward position on the housing. The specific position is not described in detail here.

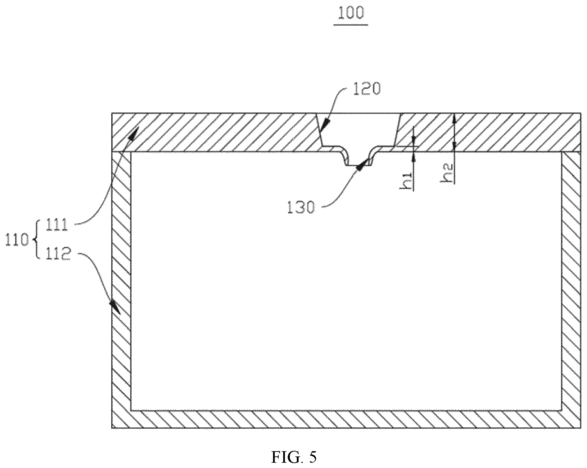

In this embodiment of this application, the first recessed portion may be formed diversely. FIG. 5 shows a battery cell 100 that employs a method for supplementing an electrolyte solution for a battery cell according to an embodiment of this application. As shown in the drawing, the first recessed portion 120 may be cut out by a cutter on an outer surface of the shell 110 of the battery cell 100 first. The thickness h1 of the bottom wall of the first recessed portion 120 is less than the thickness h2 of the shell 110, thereby making it convenient to pierce the bottom wall of the first recessed portion 120 subsequently. Afterward, the bottom wall of the first recessed portion 120 is pierced by a needle to form an injection structure 130, thereby enabling injection of an electrolyte solution into the battery cell 100.

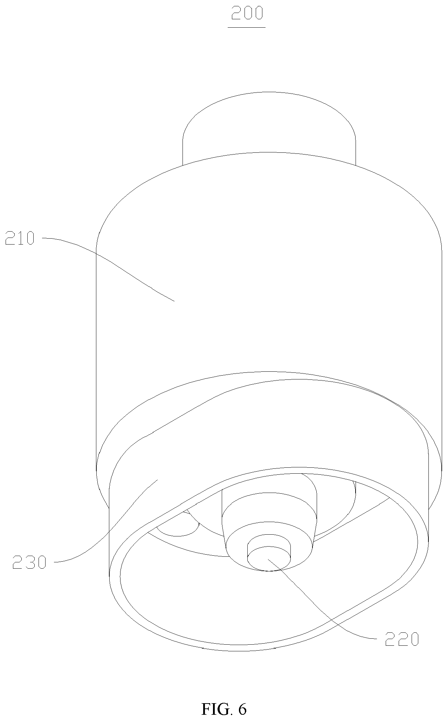

FIG. 6 shows a three-dimensional structure of a cutter 200 for processing a first recessed portion in a method for supplementing an electrolyte solution for a battery cell according to an embodiment of this application. As shown in FIG. 6, the cutter 200 may include a first body portion 210 and a tool bit 220 disposed at one end of the first body portion 210. The tool bit 220 is in contact with the shell 110. The tool bit 220 rotates relative to the first body portion 210 along an axis of the tool bit to cut the shell 110. In addition, the tool bit 220 moves toward the interior of the shell 110 to create a first recessed portion 120. Specifically, the rotation and movement of the tool bit 220 may be the rotation and movement of the tool bit 220 relative to the first body portion 210, or may be the rotation and movement of the cutter 200 as a whole. After completion of processing the first recessed portion 120, the metal chips or other impurities generated in the first recessed portion 120 may be removed by a cleaner or a vacuum-cleaner, thereby preventing the metal chips or other impurities from falling into the shell 110 and affecting the electrolyte solution when the first recessed portion 120 is subsequently pierced. The first recessed portion 120 is formed first, and the first recessed portion 120 does not pierce the shell 110. Therefore, the metal chips formed during the cutting do not fall into the interior of the battery cell 100.

After the first recessed portion 120 is formed, in order to inject an electrolyte solution into the battery cell 100, the bottom wall of the first recessed portion 120 is pierced toward the interior of the battery cell 100 to form an injection structure. After the first recessed portion 120 is formed on the shell 110, the thickness of the bottom wall of the first recessed portion on the shell 110 becomes relatively thin. In order to prevent the metal chips from falling into the housing when the injection structure 130 is formed still by cutting, the injection structure 130 in this embodiment of this application is formed by piercing the bottom wall of the first recessed portion 120 toward the interior of the shell 110 by means of a needle or another pointed tool. When the bottom wall of the first recessed portion 120 is pierced by a needle or another pointed object, the bottom wall of the first recessed portion 120 will be bent toward the interior of the shell 110 along with the piercing tool to form an injection structure. In the process of bending, due to the characteristics of the material of the shell, the pierced part of the bottom wall will not be cut off or fall into the housing, but will be still connected to the bottom wall of the first recessed portion 120. In this way, metal chips are prevented from falling into the shell 110 in the process of piercing the shell, and impurities are prevented from entering the electrolyte solution. The injection structure 130 formed by piercing may be in various shapes such as: round, square or oval, and the shapes are not limited herein.

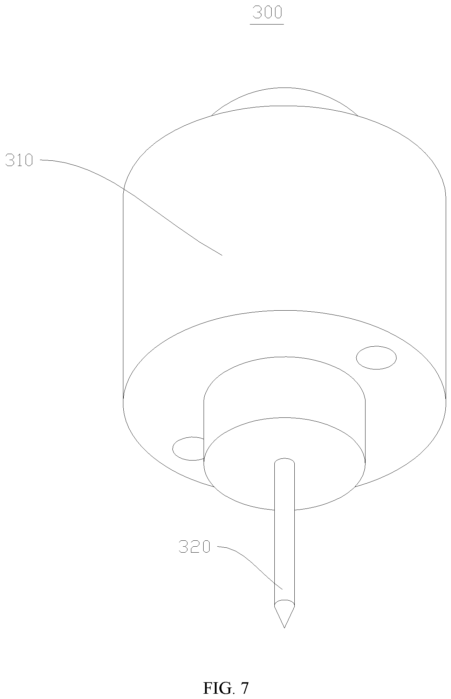

The injection structure may be formed in diverse ways. FIG. 7 shows a needle 300 for processing an injection structure 130 in a method for supplementing an electrolyte solution for a battery cell according to an embodiment of this application. The needle 300 may include a second body portion 310 and a needle tip 320. The needle tip 320 abuts on the bottom wall of the first recessed portion 120 and pierces the bottom wall of the first recessed portion 120 toward the interior of the shell 110 to implement communication between the interior and the exterior of the shell 110. In this way, the electrolyte solution can be supplemented and injected into the shell 110 by an injection apparatus.

The shell of the battery cell is processed from outside the battery cell to form the first recessed portion, and the thickness of the bottom wall of the first recessed portion is less than the thickness of the shell around the bottom wall, and then the bottom wall of the first recessed portion is pierced from outside the battery cell toward the interior of the battery cell to form the injection structure. By injecting the electrolyte solution into the battery cell through the injection structure, the electrolyte solution in the battery cell is supplemented, thereby effectively increasing the service life of the battery cell. The bottom wall of the first recessed portion is bent inward and deformed when pierced. Compared to the practice of directly cutting out and processing an injection port on the shell of the battery cell, the technical solution hereof avoids impact on the internal electrolyte solution caused by the resulting metal chips or other impurities falling into the shell, and is conducive to ensuring the performance of the battery cell in subsequent use.

Still referring to FIG. 4, in order to ensure high sealing performance inside the battery cell after supplementation with the electrolyte solution, the method for supplementing an electrolyte solution for a battery cell in some embodiments of this application further includes:
S40: Mounting a sealing cap in the first recessed portion; and
S50: Connecting the sealing cap to the first recessed portion hermetically.

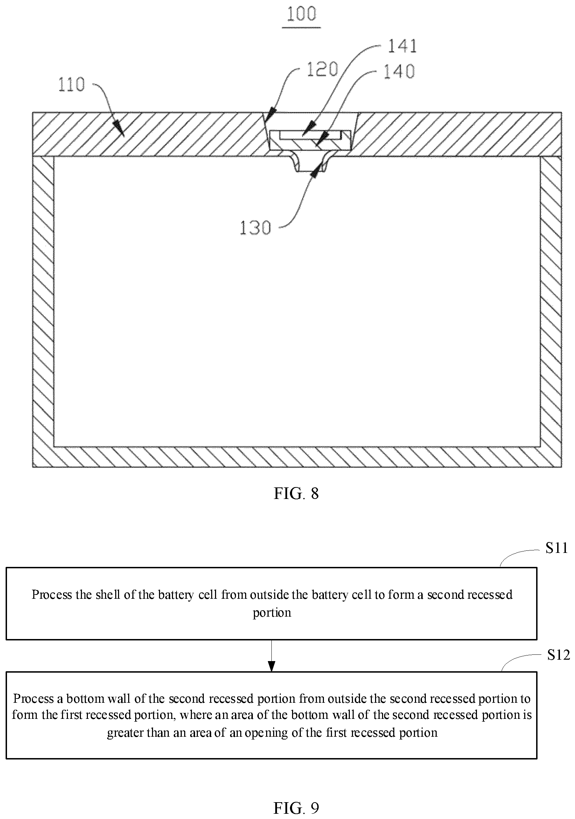

FIG. 8 shows a battery cell 100 replenished with an electrolyte solution by using a method for supplementing an electrolyte solution for a battery cell according to another embodiment of this application. As shown in the drawing, after the electrolyte solution is injected into the battery cell 100 through the injection structure 130, the sealing cap 140 is mounted inside the first recessed portion 120, and the sealing cap 140 is hermetically connected to the first recessed portion 120 to form a hermetic internal space of the shell 110.

By mounting a sealing cap in the first recessed portion and hermetically connecting the sealing cap to the first recessed portion, a hermetic space is formed inside the battery cell replenished with the electrolyte solution, thereby ensuring the stability of the battery cell in subsequent operation.

In some embodiments of this application, step S50 includes: welding an edge of the sealing cap to an edge of the first recessed portion to create a hermetic connection between the sealing cap and the first recessed portion.

Specifically, during the welding, the edge of the sealing cap and the edge of the first recessed portion are melted so that the gap between the sealing cap and the first recessed portion is filled and fused, and then the fusion is cured to form a hermetic fusion between the sealing cap and the first recessed portion.

By welding the edge of the sealing cap to the edge of the first recessed portion, this application effectively ensures the stability of the structure at the first recessed portion after the supplementation of the electrolyte solution while improving the hermeticity between the sealing cap and the first recessed portion, and provides high reliability of the battery cell in subsequent operation.

In some embodiments of this application, step S50 includes: applying a sealant between the sealing cap and the first recessed portion to create a hermetic connection between the sealing cap and the first recessed portion.

The operation of applying a sealant between the sealing cap and the first recessed portion improves the ease of operation while ensuring the internal hermeticity of the battery cell, thereby improving the electrolyte injection efficiency.

FIG. 9 shows the steps before step S10 and details of step S10 in a method for supplementing an electrolyte solution for a battery cell according to an embodiment of this application. In some embodiments of this application, before step S 10, the method further includes:
S11: Processing the shell of the battery cell from outside the battery cell to form a second recessed portion.
Step S10 includes:
   S12: Processing a bottom wall of the second recessed portion from outside the second recessed portion to form the first recessed portion, where an area of the bottom wall of the second recessed portion is greater than an area of an opening of the first recessed portion.

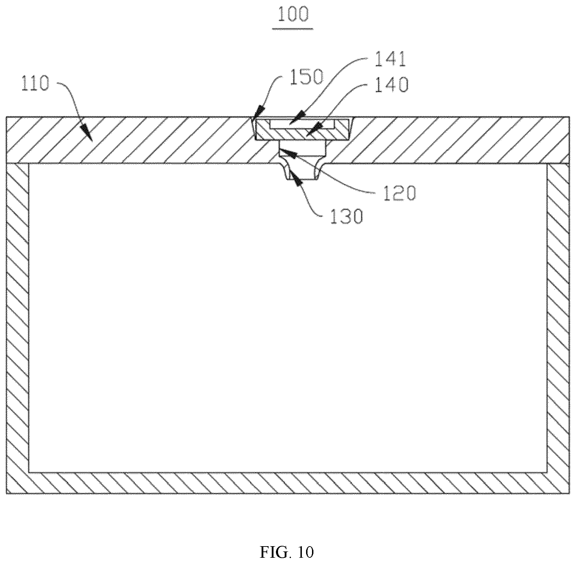

FIG. 10 shows a battery cell 100 replenished with an electrolyte solution by using a method for supplementing an electrolyte solution for a battery cell according to another embodiment of this application. As shown in the drawing, before processing the first recessed portion 120, a second recessed portion 150 may be formed by processing the surface of the shell 110 with a cutter, and then the first recessed portion 120 is formed by processing the bottom wall of the second recessed portion 150.

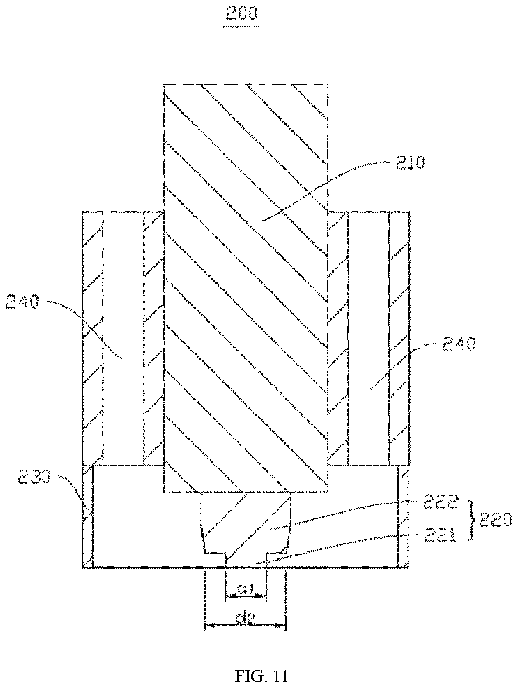

FIG. 11 shows a cross-sectional structure of a cutter 200 for processing a first recessed portion 120 and a second recessed portion 150 in a method for supplementing an electrolyte solution for a battery cell according to an embodiment of this application. As shown in the drawing, the cutter 200 includes a first body portion 210 and a tool bit 220. The tool bit 220 includes a first tool bit 221 and a second tool bit 222. The first tool bit 221 is located at an end portion of the second tool bit 222. A radial dimension d1 of the first tool bit 221 is less than a radial dimension d2 of the second tool bit 222. In this way, when the tool bit 220 cuts the shell 110 of the battery cell 100, a first recessed portion 120 is cut out by the first tool bit 221, and a second recessed portion 150 is cut out by the second tool bit 222.

By processing the bottom wall of the second recessed portion to form the first recessed portion and letting the area of the bottom wall of the second recessed portion be greater than the area of the opening of the first recessed portion, a step structure is formed between the second recessed portion and the first recessed portion, thereby facilitating positioning during electrolyte injection into the battery cell. Through the step structure, the sealing cap 140 can be disposed more conveniently, and the battery cell replenished with the electrolyte solution can be sealed more reliably.

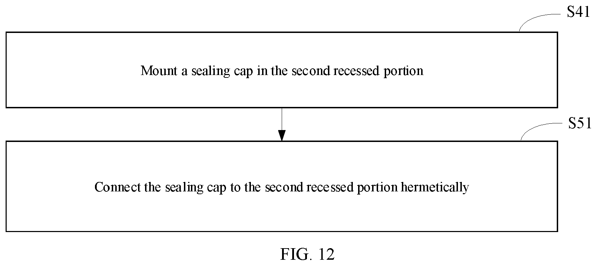

FIG. 12 shows some other steps in a method for supplementing an electrolyte solution for a battery cell according to another embodiment of this application. In some embodiments of this application, the method for supplementing an electrolyte solution for a battery cell further includes:
S41: Mounting a sealing cap in the second recessed portion; and
S51: Connecting the sealing cap to the second recessed portion hermetically.

When the sealing cap is mounted in the second recessed portion, because the area of the bottom wall of the second recessed portion is larger than the area of the opening of the first recessed portion, the sealing cap is in contact with both the sidewall and the bottom wall of the second recessed portion, thereby increasing the contact area between the sealing cap and the second recessed portion, and ensuring high hermeticity in the battery cell when the sealing cap is hermetically connected to the second recessed portion subsequently.

In some embodiments of this application, step S51 includes: welding an edge of the sealing cap to an edge of the second recessed portion to create a hermetic connection between the sealing cap and the second recessed portion.

By welding the edge of the sealing cap to the edge of the second recessed portion, this application effectively ensures the stability of the structure at the second recessed portion after the supplementation of the electrolyte solution while improving the hermeticity between the sealing cap and the first recessed portion, and provides high reliability of the battery cell in subsequent operation. Moreover, because the area of the bottom wall of the second recessed portion is larger than the area of the opening of the first recessed portion, when the sealing cap is welded to the second recessed portion, the melted structure is limited when flowing to the bottom wall of the second recessed portion, thereby preventing the melted structure from flowing from the injection structure into the shell to affect the electrolyte solution.

In some embodiments of this application, a groove is created on a side of the sealing cap, the side being away from the shell. The method for supplementing an electrolyte solution for a battery cell further includes: releasing a welding stress between the sealing cap and the first recessed portion or the second recessed portion through the groove.

As shown in FIG. 8 and FIG. 10, during the hermetic welding between the sealing cap 140 and the first recessed portion 120 or the second recessed portion 150, the welded piece is melted and then cured and fused. The melted structure is limited by the unmelted structure during the curing, thereby generating a welding stress. By disposing a groove 141 at an end of the sealing cap 140, the end being back from the shell 110, a part of the melted structure flows during welding at the edge of the sealing cap 140, and fills the gap between the sealing cap 140 and the sidewall of the first recessed portion 120 or the second recessed portion 150. Another part of the melted structure flows in the groove 141, so that the melted structure at the edge of the sealing cap 140 is not limited by other structures during curing, thereby ensuring that the welding stress can be released and enhancing the structural stability of the sealing cap 140 after welding.

In some embodiments of this application, step S51 includes: applying a sealant between the sealing cap and the second recessed portion to create a hermetic connection between the sealing cap and the second recessed portion.

The operation of applying a sealant between the sealing cap and the second recessed portion improves the ease of operation while ensuring the internal hermeticity of the battery cell, thereby improving the electrolyte injection efficiency.

In some embodiments of this application, the shell includes an end cap and a housing. The end cap fits and covers the housing. Step S10 includes: processing the end cap from outside the battery cell to form the first recessed portion.

Still referring to FIG. 5, as shown in the drawing, the shell 110 includes an end cap 111 and a housing 112. The end cap 111 is generally located on the top of the battery cell 100 in place. Therefore, in order to facilitate processing of the first recessed portion 120, in some embodiments, the end cap 111 may be processed to form the first recessed portion 120.

When the battery cell is positioned, the end cap is generally located on the top. Therefore, processing the end cap from outside the battery cell to form the first recessed portion is equivalent to processing the end cap from the top of the battery cell, thereby making it convenient to control the feed-in amount of the cutter, and improving the precision and efficiency of processing the first recessed portion. The location of the injection path may be selected depending on the specific structure of the battery cell. Generally, other structures such as an explosion-proof valve may be disposed on the end cap. In order to avoid conflict between the injection path and the structures such as the explosion-proof valve, the injection path may be disposed at a position far away from the structures such as the explosion-proof valve. In some exemplary embodiments, the injection path may be disposed on an edge of the end cap. The specific position is not limited herein.

In some embodiments of this application, the processing the end cap from outside the battery cell to form the first recessed portion includes: processing the end cap by means of a drill bit or milling cutter to form the first recessed portion.

Specifically, by cutting the end cap with the drill bit or milling cutter, the first recessed portion is processed and formed on the end cap. By controlling the feed-in amount of the drill bit or milling cutter, it is ensured that the thickness of the processed first recessed portion is appropriate. On the one hand, such operations make it convenient to subsequently pierce the bottom wall of the first recessed portion to form an injection structure. On the other hand, such operations prevent the end cap from being pierced due to over-processing of the first recessed portion. Through the pierced end cap, metal chips or other impurities are prone to fall into the battery cell to affect the electrolyte solution.

In some embodiments of this application, a protection structure is disposed on the drill bit or milling cutter. The processing the end cap from outside the battery cell to form the first recessed portion includes: covering the first recessed portion with the protection structure.

Still referring to FIG. 6, as shown in the drawing, the tool bit 220 on the cutter 200 may be a drill bit or a milling cutter. A protection structure 230 is disposed on the cutter 200. The protection structure 230 covers the tool bit 220 around the tool bit. When the first recessed portion 120 is processed on the end cap 111, the protection structure 230 abuts on the surface of the end cap 111 and covers a region of the end cap 111, where the region is used for processing the first recessed portion 120. The first recessed portion 120 is cut and processed by moving the tool bit 220 toward the housing 112.

By disposing a protection structure on the drill bit or milling cutter and covering the first recessed portion with the protection structure, the flying metal chips generated during the cutting remain in the protection structure due to shielding of the protection structure in the cutting process. Such arrangement facilitates unified treatment of the flying metal chips and other impurities after completion of processing the first recessed portion, and prevents the flying metal chips generated during processing from falling on the shell and affecting the structure of the battery cell.

In some embodiments of this application, the covering the first recessed portion with the protection structure further includes: performing vacuum-cleaning inside the protection structure.

Specifically, still referring to FIG. 11, as shown in the drawing, vacuuming pipeline 240 communicating with the inner space of the protection structure 230 may be disposed on the cutter 200. The vacuuming pipeline 240 communicates with a vacuum-cleaner. During the cutting operation of the tool bit 220, through the vacuuming pipeline 240, the vacuum-cleaner suctions away the flying metal chips generated in the protection structure 230, so as to prevent the flying metal chips from adhering to the tool bit 220 and affecting the first recessed portion 120.

The vacuum-cleaning in the protection structure prevents the flying metal chips generated during cutting from staying between the tool bit and the inner wall of the first recessed portion and scratching the inner wall of the first recessed portion. In addition, the first recessed portion is cut and processed at the same time of cleaning up the impurities, thereby improving the efficiency of supplementing the electrolyte solution for the battery cell.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A method for supplementing an electrolyte solution for a battery cell, wherein the method comprises:
processing a shell of the battery cell from outside the battery cell to form a first recessed portion, and causing a thickness of a bottom wall of the first recessed portion to be less than a thickness of the shell around the bottom wall;
piercing the bottom wall of the first recessed portion from outside the battery cell toward an interior of the battery cell to form an injection structure; and
injecting the electrolyte solution into the battery cell through the injection structure.

2. The method for supplementing an electrolyte solution for a battery cell according to claim 1, wherein the method further comprises:
mounting a sealing cap in the first recessed portion; and
hermetically connecting the sealing cap to the first recessed portion.

3. The method for supplementing an electrolyte solution for a battery cell according to claim 2, wherein the hermetically connecting the sealing cap to the first recessed portion comprises:
welding an edge of the sealing cap to an edge of the first recessed portion to create a hermetic connection between the sealing cap and the first recessed portion.

4. The method for supplementing an electrolyte solution for a battery cell according to claim 2, wherein the hermetically connecting the sealing cap to the first recessed portion comprises:
applying a sealant between the sealing cap and the first recessed portion to create a hermetic connection between the sealing cap and the first recessed portion.

5. The method for supplementing an electrolyte solution for a battery cell according to any one of claims 1 to 4, wherein before the processing a shell of the battery cell from outside the battery cell to form a first recessed portion, the method comprises:
processing the shell of the battery cell from outside the battery cell to form a second recessed portion; and
the processing a shell of the battery cell from outside the battery cell to form a first recessed portion comprises:
processing a bottom wall of the second recessed portion from outside the second recessed portion to form the first recessed portion, wherein an area of the bottom wall of the second recessed portion is greater than an area of an opening of the first recessed portion.

6. The method for supplementing an electrolyte solution for a battery cell according to claim 5, wherein the method further comprises:
mounting a sealing cap in the second recessed portion; and
hermetically connecting the sealing cap to the second recessed portion.

7. The method for supplementing an electrolyte solution for a battery cell according to claim 6, wherein the hermetically connecting the sealing cap to the second recessed portion comprises:
welding an edge of the sealing cap to an edge of the second recessed portion to create a hermetic connection between the sealing cap and the second recessed portion.

8. The method for supplementing an electrolyte solution for a battery cell according to claim 3 or 7, wherein a groove is created on a side of the sealing cap, the side being away from the shell; and
the method further comprises:
releasing a welding stress between the sealing cap and the first recessed portion or the second recessed portion through the groove.

9. The method for supplementing an electrolyte solution for a battery cell according to claim 6, wherein the hermetically connecting the sealing cap to the second recessed portion comprises:
applying a sealant between the sealing cap and the second recessed portion to create a hermetic connection between the sealing cap and the second recessed portion.

10. The method for supplementing an electrolyte solution for a battery cell according to any one of claims 1 to 7 or claim 9, wherein the shell comprises an end cap and a housing, and the end cap fits and covers the housing; and
the processing a shell of the battery cell from outside the battery cell to form a first recessed portion comprises:
processing the end cap from outside the battery cell to form the first recessed portion.

11. The method for supplementing an electrolyte solution for a battery cell according to claim 10, wherein the processing the end cap from outside the battery cell to form the first recessed portion comprises:
processing the end cap by means of a drill bit or a milling cutter to form the first recessed portion.

12. The method for supplementing an electrolyte solution for a battery cell according to claim 11, wherein a protection structure is disposed on the drill bit or milling cutter; and
the processing the end cap from outside the battery cell to form the first recessed portion comprises:
covering the first recessed portion with the protection structure.

13. The method for supplementing an electrolyte solution for a battery cell according to claim 12, wherein the covering the first recessed portion with the protection structure comprises:
performing vacuum-cleaning inside the protection structure.
